# EUROPÄISCHE PATENTSCHRIFT

(11) **EP 1 285 183 B1**
(45) Veröffentlichungstag und Bekanntmachung des Hinweises auf die Patenterteilung: **04.08.2004**
(21) Anmeldenummer: 01947175.4
(22) Anmeldetag: 28.05.2001
(51) Int. Cl.: F16H 1/28, F16H 55/08, F16H 1/46

(54) **SPIELARMES PLANETENGETRIEBE**
PLANETARY GEAR WITH LITTLE PLAY
ENGRENAGE PLANETAIRE A JEU TRES FAIBLE

(30) Priorität: 27.05.2000 DE 10026354
(43) Veröffentlichungstag der Anmeldung: 26.02.2003
(73) Patentinhaber: Alpha Getriebebau GmbH, 97999 Igersheim (DE)
(72) Erfinder: BUTSCH, Michael, 88718 Daisendorf (DE)
(74) Vertreter: Patentanwalts-Partnerschaft, Rotermund + Pfusch + Bernhard
(86) Internationale Anmeldenummer: PCT/DE2001/001987
(87) Internationale Veröffentlichungsnummer: WO 2001/092759

(56) Entgegenhaltungen:
- EP-A- 0 229 958
- DE-C- 19 729 988
- GB-A- 885 066
- GB-A- 1 118 782
- US-A- 3 021 731
- US-A- 4 074 583
- US-A- 4 610 182
- US-A- 4 934 212

## Beschreibung

Die Erfindung betrifft ein spielarmes Planetengetriebe nach dem Oberbegriff des Patentanspruchs 1.

Ein solches Planetengetriebe ist aus DE 197 29 988 Cl bekannt.

Aus EP-A1-229 958 ist ein ähnliches Getriebe bekannt, bei dem die Planetenräder durch eine elastische Verformung des Hohlrades radial verspannt gelagert sind. Das Hohlrad ist dort als ein in das Getriebegehäuse eingesetzter elastischer Ring ausgebildet.

Ein weiteres ahnliches Planetengetriebe ist in der am 21.12.1999 mit einer japanischen Priorität vom 21.12.1998 angemeldeten und am 29.06.2000 offengelegten deutschen Patentanmeldung DE 199 61 788 A1 beschrieben.

Die Erfindung beschäftigt sich mit dem Problem, ein gattungsgemäßes Planetengetriebe konstruktiv besonders einfach und damit kostengünstig herstellbar bei gleichzeitig funktionell guter und sicherer Wirksamkeit einschließlich einer langen Lebensdauer zu schaffen.

Gelost wird dieses Problem bereits grundsatzlich durch eine Ausfuhrung eines gattungsgemaßen Planetengetriebes nach dem kennzeichnenden Merkmal des Patentanspruchs 1.

Zweckmaßige Ausgestaltungen sind Gegenstand der Unteransprüche.

Die Erfindung beruht auf dem allgemeinen Gedanken, ein Spiel innerhalb des Planetengetriebes durch ein elastisches Verspannen der ineinandergreifenden Räder des Planetengetriebes mit Hilfe eines elastisch verformbaren Hohlrades zu erreichen. Dabei soll das Hohlrad in einfacher Weise in eine entsprechend elastisch nachgiebig gestaltete Außenwand des Getriebegehäuses integriert werden.

Bei einer besonders vorteilhaften Ausgestaltung ist das Hohlrad bzw. sind die Hohlräder bei einem mehrstufigen Getriebe in die Umfangswand eines als Getriebegehäuseteil dienenden Napfes eingeformt. Der Napfboden bildet dabei einen stirnseitigen Flansch des Getriebes. An der offenen Seite des Napfes ist dieser mit einer dem Napfboden gegenüberliegenden Stirnseite des Getriebegehäuses verschweißt. Diese Stirnseite kann als Anschlußflansch, in dem eine Abtriebswelle des Getriebes gelagert ist, ausgebildet sein. Damit bei einem napfförmig ausgebildeten Getriebebereich eine ausreichende elastische Verformbarkeit in dem Hohlradbereich gegeben ist, kann an den Stirnenden des Hohlradbereiches in den betreffenden Übergangsbereichen zu den radialen Stirnwandbereichen des Getriebegehäuses jeweils ein radial erhöht nachgiebiger Zwischenbereich vorgesehen sein. Auch das mindestens eine Hohlrad kann zur Erhöhung seiner elastischen Verformbarkeit mit beispielsweise Schlitzen versehen sein.

Das erfindungsgemäße Planetengetriebe kann als ein Zahnrad- oder auch Reibradgetriebe ausgebildet sein, wobei weitere vorteilhafte spezielle Ausgestaltungen der Erfindung Gegenstand entsprechender Unteransprüche sind.

Ein vorteilhaftes Ausführungsbeispiel, anhand dessen noch weitere Besonderheiten und Vorteile der Erfindung beschrieben werden, ist in der Zeichnung dargestellt.

In dieser zeigen
- Fig. 1: einen Längsschnitt durch ein Planetengetriebe mit einem napfförmig ausgebildeten Gehäuse,
- Fig. 2: einen Schnitt durch das Getriebe nach Linie II-II,
- Fig. 3: einen Schnitt nach Linie II-II durch eine alternative Getriebeausführung in der Form eines Reibradgetriebes mit exzentrisch verlaufender Sonnenradachse in schematischer Darstellung.

Das Gehäuse des Planetengetriebes besteht aus einem napfförmigen metallischen Bauteil 1, dessen Boden einen antriebsseitigen Flansch in der Form einer ersten Stirnwand 2 bildet. Der Umfangsbereich des napfförmigen Bauteiles 1 erstreckt sich praktisch über die gesamte axiale Länge des Getriebes. Der offene Rand des napfförmigen Bauteiles 1 ist mit einer abtriebsseitigen zweiten Stirnwand 3 des Getriebegehäuses verschweißt. Diese zweite Stirnwand 3 ist als gehäuseseitiger Abtriebsflansch ausgebildet.

Das Getriebe ist zweistufig ausgebildet. In der ersten Stufe treibt ein zentral angeordnetes erstes Sonnenrad 4 in einem ersten Planetenradträger 5 drehbar gelagerte erste Planetenräder 6 an.

Der erste Planetenradträger 5 ist mit einem zweiten zentral angeordneten Sonnenrad 7 der zweiten Getriebestufe verbunden. Dabei treibt das zweite Sonnenrad 7 in einem zweiten Planetenradträger 8 drehbar gelagerte zweite Planetenräder 9 an. Der zweite Planetenradträger ist fest mit einer an der zweiten Stirnwand 3 radial/axial gelagerten Abtriebswelle 10 fest verbunden.

Die Planetenräder 6 und 9 aus den beiden Getriebestufen greifen in jeweils als ein Hohlrad 11 ausgebildete Innenwandbereiche des hohlzylindrisch ausgebildeten Bereiches des napfförmigen Bauteiles 1 ein.

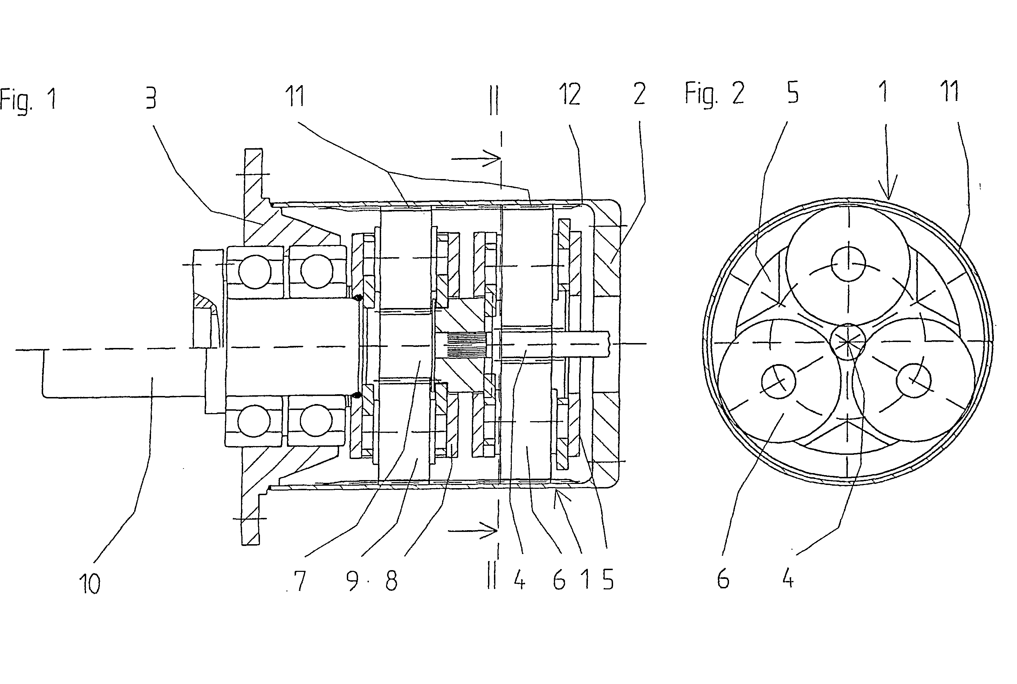

In dem in Fig. 1 gezeichneten Ausführungsbeispiel sind die ineinandergreifenden Räder des Planetengetriebes als Zahnräder ausgebildet. Dabei sind die beiden Hohlräder 11 als eine in den zylindrischen Außenwandbereich des napfförmigen Bauteiles 1 innen drückgewalzt eingebrachte Innenverzahnung mit folgenden Vorteilen ausgebildet
- die Innenverzahnung weist eine sehr glatte Oberfläche auf,
- das Getriebe-Gehäuse kann napfförmig einteilig ausgebildet sein, wobei der Napfboden einen antriebsseitigen Flansch bilden kann,
- wegen einer bei einer drückgewalzten Innenverzahnung vorliegenden Kaltverfestigung des Getriebegehäuse-Wandmaterials, kann die Wandung des Getriebegehäuses sehr dünn ausgeführt sein,
- mit verschiedenen Matrizen können unterschiedliche Weiten der Innenverzahnung erreicht werden,
- die Innenverzahnung kann in der Länge unterschiedlich für ein ein- oder mindestens zweistufiges Planetengetriebe ausgeführt sein,
- die Zahnköpfe bei der Innenverzahnung können entsprechend der Fußausrundung einer Formgebungs-Matrize ausgeführt werden, woraus sich ein niedriges Eingriffsgeräusch ergibt.

Die Planetenräder 6 und 9 sind mit gezielter radialer Vorspannung in das Getriebegehäuse eingebaut. Dadurch wird der dünnwandige Umfangsbereich des napfförmigen Bauteiles 1 tangential gedehnt und der Querschnitt verformt sich von einer ursprünglich kreisrunden Form in ein Polygon.

Die Innenverzahnung muß derart korrigiert sein, daß trotz der Verformung eine Evolventenform der Zahnflanken hinreichend genau erhalten bleibt. Mit einem relativ großen Durchmesser des Getriebe-Gehäuses wird trotz der dünnen Wandstärke der Getriebegehäuse-Umfangswand noch eine ausreichende Torsionssteifigkeit erreicht. Zwischen dem Längenbereich der Innenverzahnung, innerhalb dessen die Planetenräder 6 und 9 direkt eingreifen und den beiden Getriebe-Stirnwänden 2,3 muß ein ausreichend großer Abstand vorhanden sein, damit einerseits die Verformungen innerhalb des Hohlradbereiches die Stirnwände 2,3 möglichst nicht mehr, beziehungsweise allenfalls noch äußerst gering, beeinflussen können und damit andererseits die Stirnwände umgekehrt nicht die Verformbarkeit des Hohlradbereiches behindern.

In insbesondere dem Übergangsbereich von dem Hohlrad (11) in den ersten Stirnwandbereich (2) ist ein axialer Zwischenbereich (12) mit einer umlaufenden Wanddickeneinschnürung vorgesehen. Der Zwischenbereich (12) kann auch faltenbalgartig ausgebildet sein. Des weiteren können im Bereich der Hohlräder (11) verformungserhöhende Schlitze vorgesehen sein. Die vorgenannten verformungssichernden beziehungsweise erhöhenden Maßnahmen können an einem oder auch beiden Übergangsbereichen zu den beiden Gehäuse-Stirnwänden erfolgen.

Durch die Vorspannung der Planetenräder 6 und 9 wird die gewünschte Spielfreiheit zwischen der Innenverzahnung und der Verzahnung dieser Planetenräder erreicht, die damit zwangsläufig auch spielfrei in den Sonnenrädern 4,7 kämmen.

Die axiale Fixierung der beiden Planetenradträger 5 und 8 einschließlich des zweiten Sonnenrades 7 gegenüber dem Getriebegehäuse erfolgt ausschließlich über die Lagerung der Abtriebswelle 10.

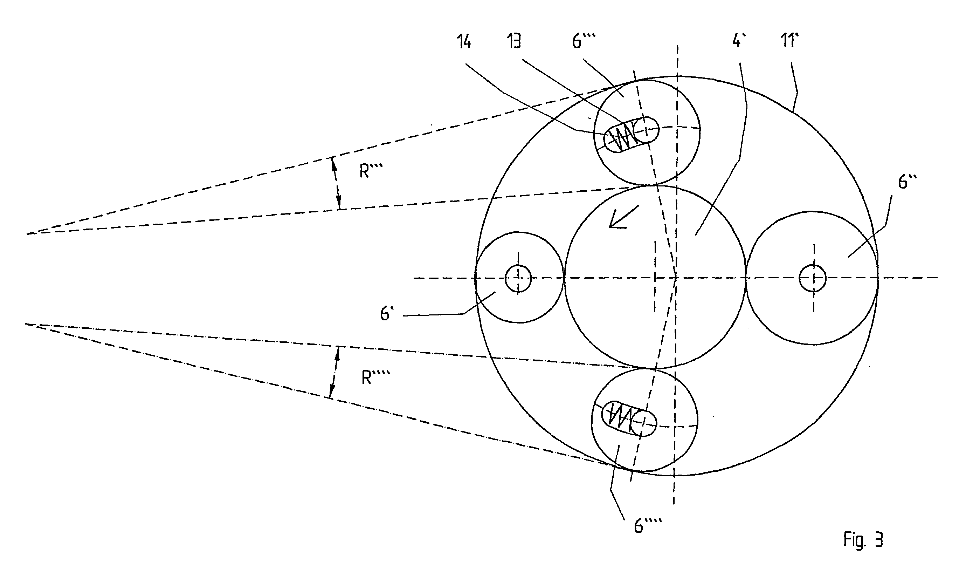

Während das Planetengetriebe nach den Fig. 1 und 2 ein Planetenzahnradgetriebe ist, zeigt die Fig. 3 eine Ausführung als beispielsweise ein Reibradgetriebe, bei dem das bzw. die Sonnenräder 4' eine exzentrisch zu dem Hohlrad 11' verlaufende Achse besitzen. Durch die exzentrische Lage des Sonnenrades 4' erfolgt eine zwangsläufige Verspannung bei den hier vorgesehenen vier Planetenrädern 6', 6'', 6''' und 6'''' durch - je nach Drehrichtung eines nicht gezeichneten, zugeordneten Planetenradträgers - jeweils eines der Planetenräder 6" oder 6'''' in einem zugeordneten keilspaltförmigen Raum R''' bzw. R''''. Die keilspaltförmigen Räume R''' und R'''' sind in der Zeichnung strichpunktiert angedeutet.

Durch die Verspannung des Hohlrades 11' durch eines der Planetenräder 6''', 6'''' verformt sich das Hohlrad 11' insgesamt und führt damit zu einer Verspannung sämtlicher umfangsmäßig angeordneter Planetenräder.

Grundsätzlich ist auch die Planetengetriebeausführung nach Fig. 3 unter Einsatz von Zahnrädern möglich.

Bei dem gezeichneten Planeten-Reibradgetriebe sind die zwei Planetenräder 6''' und 6'''', von denen je nach Drehrichtung des hier nicht dargestellten Planetenradträgers jeweils eines die angestrebte Hohlradverspannung bewirkt, etwa diametral gegenüberliegend angeordnet. Die Anordnung liegt jeweils in einem relativ stark keilspaltförmig gestalteten, zwischen Hohl- und Sonnenrad 11'; 4' liegenden Ringspalt R''', R''''. Bei der eingezeichneten Drehrichtung des Sonnenrades 4' wirkt allein das Planetenrad 6''' hohlradverspannend. Bei umgekehrter Drehrichtung ginge diese Wirkung allein von dem Planetenrad 6'''' aus.

Die hohlradverspannenden Planetenräder 6''' und 6'''' sind innerhalb des zugehörigen, nicht gezeichneten Planetenradträgers in Umfangsrichtung des Hohlrades 11' verschiebbar innerhalb eines jeweils gestrichelt angedeuteten Langloches 13 geführt.

Die Langlöcher 13 sind derart angeordnet, daß die zugehörigen Planetenräder 6''' und 6'''' in ihrer Ausgangs-Anschlaglage, d.h. bei noch nicht durch eine Verschiebung einer dieser beiden Planetenräder bewirkter bzw. erhöhter Hohlradverspannung, in gleicher Umfangsrichtung gesehen an entgegengesetzten Enden dieser Langlöcher 13 anliegen. In Richtung dieser Ausgangslage sind diese Planetenräder 6'''; 6'''' jeweils durch eine Feder 14 gespannt.

Momentenübertragend wirkt jeweils von den beiden verschiebbar gelagerten Planetenrädern 6''', 6'''' lediglich dasjenige, welches sich bedingt durch die Drehrichtung des Planetenradträgers in seiner Anschlag-Ausgangslage befindet, d.h. nicht gegen eine Feder 14 verschoben ist. Das jeweils gerade nicht an der Momentenübertragung beteiligte Planetenradhier nach der Zeichnung das Planetenrad 6''' - bewirkt somit in diesem Zustand ausschließlich eine Verspannung des Hohlrades 11'.

## Patentansprüche

1. Spielarmes Planetengetriebe mit bezogen auf jeweils eine Übersetzungsstufe mindestens
- einem Gehause,
- einem Sonnenrad (4),
- einem elastisch verformbaren Hohlrad (11), das als ein in der Radialebene dieses Hohlrades einstuckiger Außenwandbereich des Gehauses gebildet ist,
- in einem Planetenradtrager (5) drehbar gelagerten, einerseits an dem Sonnenrad (4) und andererseits an dem Hohlrad (11) kraftubertragend angreifenden Planetenrädern (6),
**dadurch gekennzeichnet,**
**daß** die Planetenräder (6) durch eine elastische Verformung des Hohlrades (11) radial verspannt gelagert sind.

2. Planetengetriebe nach Anspruch 1,
**dadurch gekennzeichnet,**
**daß** der gesamte zwischen den stirnseitigen Enden des Getriebegehauses liegende Außenwandbereich des Gehauses elastisch verformbar gestaltet ist.

3. Planetengetriebe nach Anspruch 2,
**dadurch gekennzeichnet,**
**daß** der elastisch verformbare Außenbereich an einem ersten stirnseitigen Ende einstuckig in einen etwa senkrecht zu der Gehäuseachse verlaufenden ersten Stirnwandbereich (2) übergeht.

4. Planetengetriebe nach Anspruch 3,
**dadurch gekennzeichnet,**
**daß** in dem Übergangsbereich von dem axialen Außenwandbereich in mindestens einen der beiden radialen Stirnwandbereiche (2, 3) ein radial erhöht nachgiebiger, axialer Zwischenbereich (12) vorgesehen ist.

5. Planetengetriebe nach Anspruch 4,
**dadurch gekennzeichnet,**
**daß** der radial erhöht nachgiebig ausgebildete, axiale Zwischenbereich (12) durch eine umlaufende Wanddickeneinschnürung, einen faltenbalgartigen Wandabschnitt oder Durchbrüche gebildet ist.

6. Planetengetriebe nach einem der vorhergehenden Ansprüche,
**dadurch gekennzeichnet,**
**daß** das mindestens eine Hohlrad (11') zur Erhöhung seiner elastischen Verformbarkeit mit Schlitzen versehen ist.

7. Planetengetriebe nach einem der vorhergehenden Ansprüche,
**dadurch gekennzeichnet,**
**daß** das elastisch verformbare Hohlrad (11) an seinem zweiten Ende mit einer das Getriebegehäuse nach axial außen begrenzenden zweiten Stirnwand (3) verschweißt ist.

8. Planetengetriebe nach einem der vorhergehenden Ansprüche,
**dadurch gekennzeichnet,**
**daß** die Achse des Sonnenrades (4, 4'; 7) exzentrisch zu der Achse des Hohlrades (11; 11') verläuft.

9. Reibradgetriebe in einer Ausführung nach Anspruch 8,
**dadurch gekennzeichnet,**
**daß** insgesamt mindestens vier Planetenräder (6', 6'', 6''', 6'''') vorgesehen sind, von denen zwei etwa diametral gegenüberliegende Planetenräder (6''', 6'''') innerhalb eines zugehörigen Planetenradträgers in Umfangsrichtung des Hohlrades (11') verschiebbar gelagert sind, wobei diese beiden Planetenräder (6''', 6'''') von einer vorgegebenen Ausgangs-Anschlaglage aus in unterschiedliche Umfangsrichtungen verschiebbar sind.

10. Reibradplanetengetriebe nach Anspruch 9,
**dadurch gekennzeichnet,**
**daß** die beiden verschiebbaren Planetenräder (6''', 6'''') mit Bezug auf eine Einnahme ihrer Ausgangs-Anschlaglage federbelastet sind.

11. Reibradplanetengetriebe nach Anspruch 9 oder 10,
**dadurch gekennzeichnet,**
**daß** die beiden verschiebbaren Planetenräder (6''', 6'''') in einem Umfangsbereich des Hohlrades (11') liegen, in dem durch die exzentrische Achsenlage von Sonnen- und Hohlrad (4', 11') eine relativ große Veränderung der zwischen Sonnen- und Hohlrad (4'; 11') liegenden Ringspaltbreite erfolgt.

12. Planetenzahnradgetriebe nach einem der Ansprüche 1 bis 8,
**dadurch gekennzeichnet,**
**daß** die Verzahnung des Hohlrades (11) eine drückgewalzte Innenverzahnung ist.

## Claims

1. A planetary gear with little play comprising, for one stage of reduction each, at least
- one housing;
- one sun wheel (4);
- an elastically deformable internal geared wheel (11) which, is designed as a single-piece outer wall region in the radial plane of said internal geared wheel;
- planetary wheels (6) that are rotatably held by a planetary carrier (5) and that act on the one hand on the sun wheel (4) and on the other hand on the internal geared wheel (11), thereby transmitting power,
**characterised in that**
the planetary wheels (6) are held in a bearing arrangement so as to be radially tensioned by elastic deformation of the internal geared wheel (11).

2. The planetary gear according to claim 1,
**characterised in that**
the entire outer wall region of the housing, situated between the face ends of the gear housing, is designed so as to be elastically deformable.

3. The planetary gear according to claim 2,
**characterised in that**
in a first face end, the elastically deformable outer wall region makes a transition in one piece, to a first face wall region (2) which extends approximately perpendicular to the housing axis.

4. The planetary gear according to claim 3,
**characterised in that**
in the transition region from the axial outer wall region to at least one of the two radial face wall regions (2, 3) an axial intermediate region (12) with increased radial compliance, has been provided.

5. The planetary gear according to claim 4,
**characterised in that**
the axial intermediate region (12) with increased radial compliance is formed by a circumferential reduction in the wall thickness, by a wall section in the manner of an expansion bellows, or by openings.

6. The planetary gear according to any one of the preceding claims,
**characterised in that**
the internal geared wheel (11'), of which there is at least one, comprises slots to increase its elastic deformability.

7. The planetary gear according to any one of the preceding claims,
**characterised in that**
at its second end, the elastically deformable internal geared wheel (11) is welded to a second face wall (3) which delimits the gear housing axially to the outside.

8. The planetary gear according to any one of the preceding claims,
**characterised in that**
the axis of the sun wheel (4, 4'; 7) extends eccentrically in relation to the axis of the internal geared wheel (11; 11').

9. A friction gear designed according to claim 8,
**characterised in that**
in total at least four planetary wheels (6', 6'', 6''', 6'''') are provided, of which two are approximately diametrically opposed planetary wheels (6''', 6''''), slidably held, in circumferential direction of the internal geared wheel (11'), in a bearing arrangement within an associated planetary carrier, with said two planetary wheels (6''', 6'''') being slidable from a predefined initial end-stop position in different circumferential directions.

10. The friction gear according to claim 9,
**characterised in that**
in relation to taking up their initial end-stop position, the two slidable planetary wheels (6''', 6'''') are spring-loaded.

11. The friction gear according to claim 9 or 10,
**characterised in that**
the two slidable planetary wheels (6''', 6'''') are situated in a circumferential region of the internal geared wheel (11') in which as a result of the eccentric axial position of sun wheel and internal geared wheel (4', 11') a relatively major change in the width of the annular gap between the sun wheel and the internal geared wheel (4'; 11') takes place.

12. A planetary toothed gear according to any one of claims 1 to 8,
**characterised in that**
the gearing of the internal geared wheel (11) is a flow-turned internal tooth arrangement.

## Revendications

1. Engrenage planétaire à faible jeu présentant, par rapport à respectivement un étage de transmission au moins,
- un carter
- une roue solaire (4)
- une couronne (11) déformable élastiquement, qui est réalisée dans le plan radial de cette couronne en tant que zone de paroi extérieure en une seule pièce du carter,
- des roues satellites (6) venant en prise avec transmission de force d'une part sur la roue solaire (4) et d'autre part sur la couronne (11), supportées rotatives dans un porte-satellite (5),
**caractérisé en ce**
**que** les roues satellites (6) sont supportées contraintes radialement par une déformation élastique de la couronne (11).

2. Engrenage planétaire selon la revendication 1,
**caractérisé en ce**
**que** l'ensemble de la zone de paroi extérieure du carter située entre les zones d'extrémité frontales du carter d'engrenage, est réalisé déformable élastiquement.

3. Engrenage planétaire selon la revendication 2,
**caractérisé en ce**
**qu'**à une première extrémité frontale, la zone extérieure déformable élastiquement se transforme en une seule pièce en une première zone de paroi frontale (2) s'étendant sensiblement perpendiculairement à l'axe du carter.

4. Engrenage planétaire selon la revendication 3,
**caractérisé en ce**
**qu'**une zone intermédiaire (12) axiale plus souple radialement est prévue dans la zone de transition de la zone de paroi extérieure axiale, à au moins l'une des deux zones de paroi frontales radiales (2, 3).

5. Engrenage planétaire selon la revendication 4,
**caractérisé en ce**
**que** la zone intermédiaire (12) axiale, réalisée plus souple radialement, est formée par un amincissement d'épaisseur de paroi périphérique, une section de paroi du genre soufflet ou des percées.

6. Engrenage planétaire selon l'une des revendications précédentes,
**caractérisé en ce**
**que** la au moins une couronne (11') est pourvue de fentes pour augmenter sa capacité de déformation élastique.

7. Engrenage planétaire selon l'une des revendications précédentes
**caractérisé en ce**
**qu'**à sa seconde extrémité, la couronne (11) déformable élastiquement est soudée à une seconde paroi frontale (3) délimitant le carter d'engrenage axialement vers l'extérieur.

8. Engrenage planétaire selon l'une des revendications précédentes
**caractérisé en ce**
**que** l'axe de la roue solaire (4, 4' ; 7) s'étend excentré par rapport à l'axe de la couronne (11 ; 11').

9. Engrenage à roues de friction dans un mode de réalisation selon la revendication 8,
**caractérisé en ce**
**que** dans l'ensemble sont prévues quatre roues satellites (6', 6", 6"', 6""), dont deux roues satellites (6"', 6"") sensiblement diamétralement opposées sont supportées coulissantes dans la direction périphérique de la couronne (11') à l'intérieur d'un porte-satellite associé, ces deux roues satellites (6"', 6"") étant coulissantes dans différentes directions périphériques à partir d'une position de butée initiale.

10. Engrenage à roues de friction selon la revendication 9,
**caractérisé en ce**
**que** les deux roues satellites (6"', 6"") coulissantes sont chargées par ressort relativement à une occupation de leur position de butée initiale.

11. Engrenage à roues de friction selon la revendication 9 ou 10,
**caractérisé en ce**
**que** les deux roues satellites (6"', 6"") coulissantes reposent dans une zone périphérique de la couronne (11'), dans laquelle, par la position d'axe excentrée de la roue solaire et de la couronne (4', 11'), il se produit une variation relativement grande de la largeur de fente annulaire située entre la roue solaire et la couronne (4', 11').

12. Engrenage planétaire à roues dentées selon l'une des revendications 1 à 8,
**caractérisé en ce**
**que** la denture de la couronne (11) est une denture intérieure fluotournée.
